# FASCICULE DE BREVET EUROPEEN

(11) **EP 2 379 631 B1**
(45) Date de publication et mention de la délivrance du brevet: **02.09.2015**
(21) Numéro de dépôt: 09775231.5
(22) Date de dépôt: 18.12.2009
(51) Int. Cl.: C08K 5/16, C08K 5/548, C08L 21/00

(54) **COMPOSITION DE CAOUTCHOUC DEPOURVUE OU QUASIMENT DEPOURVUE DE ZINC**
ZINKFREIE ODER PRAKTISCH ZINKFREIE KAUTSCHUKMASSE
RUBBER COMPOUND CONTAINING NO OR VIRTUALLY NO ZINC

(30) Priorité: 22.12.2008 FR 0858926
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: CAMBON, Stéphanie, F-63400 Chamalières (FR); VASSEUR, Didier, F-63100 Clermont-Ferrand (FR)
(74) Mandataire: Cohen, Sylvia
(86) Numéro de dépôt international: PCT/EP2009/067546
(87) Numéro de publication internationale: WO 2010/072679

(56) Documents cités:
- WO-A1-02/30939
- WO-A1-03/054081
- WO-A2-02/48256
- US-B2- 6 506 827

## Description

La présente invention est relative aux compositions de caoutchoucs diéniques renforcées d'une charge inorganique telle que silice, utilisables notamment pour la fabrication de pneumatiques ou produits semi-finis pour pneumatiques tels que des bandes de roulement. La vulcanisation des élastomères diéniques par le soufre est largement utilisée dans l'industrie du caoutchouc, en particulier dans celle du pneumatique. Pour vulcaniser les élastomères diéniques, on utilise un système de vulcanisation relativement complexe comportant, en plus du soufre, divers accélérateurs de vulcanisation ainsi qu'un ou plusieurs activateurs de vulcanisation, tout particulièrement des dérivés du zinc tels que l'oxyde de zinc (ZnO), des sels de zinc d'acides gras tels que le stéarate de zinc.

Un objectif à moyen terme des manufacturiers de pneumatiques est de supprimer le zinc ou ses dérivés de leurs formulations de caoutchouterie, en raison du caractère relativement toxique connu de ces composés, notamment vis-à-vis de l'eau et des organismes aquatiques (classement R50 selon directive européenne 67/548/CE du 9 décembre 1996).

Il se trouve toutefois que la suppression de l'oxyde de zinc, spécifiquement dans des compositions de caoutchouc renforcées d'une charge inorganique telle que silice, pénalise très fortement les caractéristiques de mise en oeuvre ("processabilité") des compositions de caoutchouc à l'état cru, avec une réduction du temps de grillage qui est rédhibitoire du point de vue industriel. On rappelle que le phénomène dit de "grillage" conduit rapidement, au cours de la préparation des compositions de caoutchouc dans un mélangeur interne, à des vulcanisations prématurées (*"scorching"*)*,* à des viscosités à l'état cru très élevées, en fin de compte à des compositions de caoutchouc quasiment impossibles à travailler et à mettre en oeuvre industriellement.

Pour répondre au problème de suppression du zinc, il a été certes proposé de remplacer l'oxyde de zinc par un autre oxyde métallique, par exemple MgO, ou encore par un sel ou oxyde d'un métal de transition appartenant aux groupes IIA, IVA, VA, VIA, VIIA ou VIIIA du tableau périodique des éléments, particulièrement cobalt ou nickel (voir documents de brevet US 6,506,827 et WO 2003/054081). WO 02/48256 A2 décrit des compositions d'élastomères diéniques comprenant du soufre, une charge renforçante inorganique, un disulfure d'amine (Delac S ou CBS) et un mercaptosilane bloqué (Silane A ou 3-octanoylthio-1 -propyltriethoxysilane).

WO 02/30939 A1 décrit des compositions d'élastomère diénique comprenant du soufre, une charge renforçante inorganique, un disulfure d'amine (N-cyclohexyl-2-benzothiazyl-sulfénamide) et le TESPT.

US 6 506 827 B2 et WO 03/054081 A1 décrivent des compositions d'élastomères diéniques dans lesquelles l'oxyde de Zinc est remplacé par un autre oxyde de métal.

De telles solutions, outre le fait qu'elles ne satisfont pas aux exigences des compositions de caoutchouc renforcées d'une charge inorganique, au moins pour certaines d'entre elles, ne sont pas réellement acceptables à long terme, du point de vue du "développement durable" et de la protection de l'environnement, dans la mesure où elles proposent de remplacer un métal par un autre métal, tout aussi condamné à terme à être dispersé dans la nature avec les débris d'usure des pneumatiques, particulièrement ceux des bandes de roulement résultant inévitablement des divers frottements dus pour l'essentiel aux efforts de freinage, d'accélération, de prises de virage.

Poursuivant leurs recherches, les Demanderesses ont trouvé une solution nouvelle qui permet de diminuer de façon très importante le zinc des formulations de caoutchouterie renforcées d'une charge inorganique telle que silice, voire de le supprimer totalement, sans remplacer le zinc par un autre métal et tout en préservant les compositions de caoutchouc du problème de grillage prématuré lors de leur mise en oeuvre industrielle.

En conséquence, un premier objet de l'invention concerne une composition de caoutchouc dépourvue de zinc ou contenant moins de 0,5 pce de zinc, utilisable pour la fabrication de pneumatiques, à base d'au moins :
- un élastomère diénique,
- un système de réticulation à base de soufre,
- une charge inorganique à titre de charge renforçante,
- un mercaptosilane bloqué à titre d'agent de couplage,
- et un disulfure d'amine à titre d'agent donneur de soufre.

C'est l'emploi combiné du mercaptosilane bloqué et du disulfure d'amine qui permet, de manière inattendue, de pallier la quasi-absence ou même l'absence totale de zinc dans les compositions de l'invention.

De préférence, le disulfure d'amine est choisi dans le groupe comprenant la 4,4'-dithiomorpholine, la 2-(4-morpholinodithio)-benzothiazole, le disulfure de caprolactame.

Avantageusement, le mercaptosilane bloqué répond à la formule générale (I):

(R²O)ₐR¹₍₃₋ₐ₎-Si-Z-S-C(=O)-A

dans laquelle :
- les symboles R¹ et R², identiques ou différents, représentent chacun un groupe hydrocarboné monovalent choisi parmi les alkyles, linéaires ou ramifiés, les cycloalkyles ou les aryles, ayant de 1 à 18 atomes de carbone ;
- le symbole A représente l'hydrogène ou un groupe hydrocarboné monovalent choisi parmi les alkyles, linéaires ou ramifiés, les cycloalkyles ou les aryles, ayant de 1 à 18 atomes de carbone et les alkoxyalkyles, linéaires ou ramifiés, ayant de 2 à 8 atomes de carbone ;
- le symbole Z représente un groupe de liaison divalent comportant de 1 à 18 atomes de carbone ;
- a est un nombre entier égal 1, 2 ou 3.

Selon une caractéristique de l'invention, les caractéristiques suivantes sont vérifiées :
- les symboles R¹ et R² sont choisis parmi méthyle, éthyle, n-propyle et isopropyle, de préférence parmi méthyle et éthyle ;
- le symbole A est choisi parmi hydrogène, méthyle, éthyle, n-propyle et isopropyle, de préférence parmi hydrogène, méthyle et éthyle ;
- le symbole Z est choisi parmi les alkylènes en C₁-C₈, de préférence parmi les alkylènes en C₁-C₄.

Avantageusement, Z est choisi parmi méthylène, éthylène ou propylène, plus particulièrement le propylène et encore plus avantageusement R¹, R² et A sont des éthyles et Z est un propylène.

Selon une autre caractéristique de l'invention, l'élastomère diénique est choisi dans le groupe constitué par les polybutadiènes, les polyisoprènes synthétiques, le caoutchouc naturel, les copolymères de butadiène, les copolymères d'isoprène et les mélanges de ces élastomères.

Selon un mode de réalisation de l'invention, la charge inorganique renforçante étant une charge siliceuse ou alumineuse.

De préférence, la quantité de charge inorganique renforçante est supérieure à 50 pce, de préférence comprise entre 60 et 140 pce ; le taux d'agent de couplage étant notamment compris entre 2 et 15 pce, de préférence entre 4 et 12 pce et le taux de noir de carbone étant notamment inférieur à 10 pce, de préférence inférieur à 6 pce.

L'invention a également pour objet l'utilisation d'une composition conforme à l'invention pour la fabrication d'articles finis ou produits semi-finis, ainsi que ces articles finis et produits semi-finis eux-mêmes, comportant une composition de caoutchouc conforme à l'invention, ces articles ou produits étant destinés à tout système de liaison au sol des véhicules automobiles, tels que pneumatiques, appuis internes de sécurité pour pneumatiques, roues, ressorts en caoutchouc, articulations élastomériques, autres éléments de suspension et anti-vibratoire.

L'invention a tout particulièrement pour objet l'utilisation d'une composition de caoutchouc conforme à l'invention pour la fabrication de pneumatiques ou de produits semi-finis en caoutchouc destinés à ces pneumatiques, ces produits semi-finis étant notamment choisis dans le groupe constitué par les bandes de roulement, les sous-couches destinées par exemple à être placées sous ces bandes de roulement, les nappes sommet, les flancs, les nappes carcasse, les talons, les protecteurs, les chambres à air et les gommes intérieures étanches pour pneu sans chambre.

La composition conforme à l'invention est particulièrement adaptée à la fabrication de bandes de roulement de pneumatiques destinés à équiper des véhicules de tourisme, camionnettes, véhicules 4x4 (à 4 roues motrices), deux roues, "Poids-lourds" (c'est-à-dire métro, bus, engins de transport routier (camions, tracteurs, remorques), véhicules hors-la-route), avions, engins de génie civil, agraire, ou de manutention, ces bandes de roulement pouvant être utilisées lors de la fabrication de pneumatiques neufs ou pour le rechapage de pneumatiques usagés.

L'invention concerne également un procédé de préparation d'une composition dépourvu de zinc ou contenant moins de 0,5 pce de zinc, qui est caractétisé en ce qu'on incorpore au moins, par malaxage, à au moins (i) un élastomère diénique, (ii) une charge inorganique à titre de charge renforçante, (iii) un mercaptosilane bloqué et un disulfure d'amine, et (iv) un système de vulcanisation à base de soufre.

Avantageusement ce procédé comporte les étapes suivantes :
- incorporer à l'élastomère diénique, dans un mélangeur, la charge renforçante, le mercaptosilane bloqué et le disulfure d'amine en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite : le système de vulcanisation;
- malaxer le tout jusqu'à une température maximale inférieure à 120°C ;
extruder ou calandrer la composition de caoutchouc ainsi obtenue.

L'invention a également pour objet ces pneumatiques et ces produits semi-finis en caoutchouc eux-mêmes, notamment ces bandes de roulement, lorsqu'ils comportent une composition de caoutchouc conforme à l'invention. L'invention a également pour objet l'utilisation de telles bandes de roulement pour la fabrication de pneumatiques neufs ou le rechapage des pneumatiques usagés.

L'invention concerne ces pneumatiques et bandes de roulement tant à l'état cru (i.e., avant cuisson) qu'à l'état cuit (i.e., après réticulation ou vulcanisation).

La bande de roulement conforme à l'invention est particulièrement adaptée aux pneumatiques destinés à équiper des véhicules à moteur de type tourisme.

L'invention ainsi que ses avantages seront aisément compris à la lumière de la description détaillée qui suit.

### I. MESURES ET TESTS UTILISES

Les compositions de caoutchouc sont caractérisées, avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### 1-2. Temps de grillage

Les mesures sont effectuées à 130°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'une grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### 1-3 Dureté Shore A:

La dureté Shore A des compositions après cuisson est appréciée conformément à la norme ASTM D 2240-86.

### I-4. Essais de traction

Ces essais permettent de déterminer les contraintes d'élasticité et les propriétés à la rupture. Sauf indication différente, ils sont effectués conformément à la norme française NF T 46-002 de septembre 1988. On mesure en élongation les modules sécants nominaux (ou contraintes apparentes, en MPa) à 10% d'allongement (notés M10), 100% d'allongement (M100) et 300% d'allongement (M300). On mesure également les contraintes à la rupture (en MPa) et les allongements à la rupture (en %).

### II. DESCRITION DETAILLEE DE L'INVENTION

Les compositions de l'invention sont donc à base d'au moins : (i) un (au moins un) élastomère diénique, (ii) une (au moins une) charge inorganique titre de charge renforçante et (iii) un (au moins un) silane-polysulfure de formule (I) spécifique à titre d'agent de couplage charge inorganique/ élastomère diénique (pce = parties pour cent d'élastomère, en poids).

Par l'expression composition "à base de", il faut entendre dans la présente demande une composition comportant le mélange et/ou le produit de réaction des différents constituants utilisés, certains de ces constituants de base (par exemple l'agent de couplage) étant susceptibles de, ou destinés à réagir entre eux, au moins en partie, lors des différentes phases de fabrication des compositions, en particulier au cours de leur vulcanisation (cuisson).

Dans la présente description, sauf indication expresse différente, tous les pourcentages (%) indiqués sont des % en masse.

### II-1. Elastomère diénique

Par élastomère ou caoutchouc "diénique", on entend de manière générale un élastomère issu au moins en partie (i.e. un homopolymère ou un copolymère) de monomères diènes (monomères porteurs de deux doubles liaisons carbone-carbone, conjuguées ou non).

Les élastomères diéniques, de manière connue, peuvent être classés en deux catégories : ceux dits "essentiellement insaturés" et ceux dits "essentiellement saturés". Par élastomère diénique "essentiellement insaturé", on entend un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans cette définition et peuvent être qualifiés au contraire d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) - un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di-alkyl(C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

En résumé, de manière particulièrement préférentielle, l'élastomère diénique de la composition conforme à l'invention est choisi dans le groupe des élastomères diéniques (fortement insaturés) constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Selon un mode de réalisation particulier, l'élastomère diénique est majoritairement (i.e., pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), BR/NR (ou BR/IR), ou encore SBR/BR/NR (ou SBR/BR/IR). Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple de 30 à 100 pce, en particulier de 50 à 100 pce, d'un élastomère à haute Tg en coupage avec 0 à 70 pce, en particulier de 0 à 50 pce, d'un élastomère à basse Tg ; selon un autre exemple, elle comporte pour la totalité des 100 pce un ou plusieurs SBR préparé(s) en solution.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge inorganique renforçante

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" (*"non-black filler"*) par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique, en particulier pour bande de roulement ; une telle charge se caractérise généralement, de manière connue, par la présence de groupes hydroxyle (-OH) à sa surface.

Préférentiellement, la charge inorganique renforçante est une charge du type siliceuse ou alumineuse, ou un mélange de ces deux types de charges.

La silice (SiO₂) utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. Les silices précipitées hautement dispersibles (dites "HDS") sont préférées, en particulier lorsque l'invention est mise en oeuvre pour la fabrication de pneumatiques présentant une faible résistance au roulement ; comme exemples de telles silices, on peut citer les silices Ultrasil 7000 de la société Degussa, les silices Zeosil 1165 MP, 1135 MP et 1115 MP de la société Rhodia, la silice Hi-Sil EZ150G de la société PPG, les silices Zeopol 8715, 8745 ou 8755 de la Société Huber.

L'alumine (Al₂O₃) renforçante utilisée préférentiellement est une alumine hautement dispersible ayant une surface BET allant de 30 à 400 m²/g, plus préférentiellement entre 60 et 250 m²/g, une taille moyenne de particules au plus égale à 500 nm, plus préférentiellement au plus égale à 200 nm. Comme exemples non limitatifs de telles alumines renforçantes, on peut citer notamment les alumines "Baikalox A125" ou "CR125" (société Baïkowski), "APA-100RDX" (Condéa), "Aluminoxid C" (Degussa) ou "AKP-G015" (Sumitomo Chemicals).

A titre d'autres exemples de charge inorganique susceptible d'être utilisée dans les compositions de caoutchouc des bandes de roulement de l'invention peuvent être encore cités des (oxyde-)hydroxydes d'aluminium, des aluminosilicates, des oxydes de titane, des carbures ou nitrures de silicium, tous du type renforçants tels que décrits par exemple dans les demandes WO 99/28376, WO 00/73372, WO 02/053634, WO 2004/003067, WO 2004/056915.

Lorsque les bandes de roulement de l'invention sont destinées à des pneumatiques à faible résistance au roulement, la charge inorganique renforçante utilisée, en particulier s'il s'agit de silice, a de préférence une surface BET comprise entre 60 et 350 m2/g. Un mode de réalisation avantageux de l'invention consiste à utiliser une charge inorganique renforçante, en particulier une silice, ayant une surface spécifique BET élevée, comprise dans un domaine de 130 à 300 m²/g, en raison du haut pouvoir renforçant reconnu de telles charges. Selon un autre mode préférentiel de réalisation de l'invention, on peut utiliser une charge inorganique renforçante, en particulier une silice, présentant une surface spécifique BET inférieure à 130 m²/g, préférentiellement dans un tel cas comprise entre 60 et 130 m²/g (voir par exemple demandes WO03/002648 et WO03/002649).

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

L'homme du métier saura adapter le taux de charge inorganique renforçante selon la nature de la charge inorganique utilisée et selon le type de pneumatique concerné, par exemple pneumatique pour moto, pour véhicule de tourisme ou encore pour véhicule utilitaire tel que camionnette ou Poids lourd. De préférence, ce taux de charge inorganique renforçante sera choisi compris entre 20 et 200 pce, plus préférentiellement entre 30 et 150 pce, en particulier supérieur à 50 pce, et plus préférentiellement encore compris entre 60 et 140 pce.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression *relative p*/*po* : 0.05 à 0.17). La surface spécifique CTAB est la surface externe déterminée selon la norme française NF T 45-007 de novembre 1987 (méthode B).

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. Comme exemples de telles charges organiques, on peut citer les charges organiques de polyvinylaromatique fonctionnalisé telles que décrites dans les demandes WO 2006/069792 et WO 2006/069793.

La charge inorganique renforçante peut être utilisée également associée à une charge renforçante organique, en particulier du noir de carbone, par exemple un noir du type HAF, ISAF, SAF, conventionnellement utilisé dans les pneumatiques et particulièrement dans les bandes de roulement des pneumatiques (par exemple noirs N115, N134, N234, N326, N330, N339, N347, N375, ou encore, selon les applications visées, les noirs de séries plus élevées, par exemple N660, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère isoprénique sous la forme d'un masterbatch (voir par exemple demandes WO 97/36724 ou WO 99/16600).

La quantité de noir de carbone présente dans la charge renforçante totale peut varier dans de larges limites, elle est de préférence inférieure à celle de l'hydroxyde métallique renforçant. Avantageusement, on utilise du noir de carbone en très faible proportion, à un taux préférentiel inférieur à 10 pce, plus préférentiellement inférieur à 6 pce (parties en poids pour cent parties d'élastomère). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante. Bien entendu, la composition de l'invention elle peut être totalement dépourvue de noir de carbone.

### II-3. Agent de couplage

On rappelle ici que par "agent de couplage" on entend, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-Z-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- Z représente un groupe divalent permettant de relier Y et X.

Des agents de couplage, notamment silice/ élastomère diénique ont été décrits dans un très grand nombre de documents, les plus connus étant des organosilanes bifonctionnels porteurs de fonctions alkoxyle (c'est-à-dire, par définition, des "alkoxysilanes") à titre de fonctions "Y" et, à titre de fonctions "X", de fonctions capables de réagir avec l'élastomère diénique telles que par exemple des fonctions polysulfure.

Parmi les composés alkoxysilane-polysulfure connus, doit être particulièrement cité le tétrasulfure de bis 3-triéthoxysilylpropyle (en abrégé "TESPT"), de formule [(C₂H₅O)₃Si(CH₂)₃S₂]₂, commercialisé notamment par la société Degussa sous la dénomination "Si69" (ou "X50S" lorsqu'il est supporté à 50% en poids sur du noir de carbone), sous la forme d'un mélange commercial de polysulfures Sₓ avec une valeur moyenne pour x qui est proche de 4.

Le TESPT, connu de très longue date, est considéré encore aujourd'hui comme le produit apportant le meilleur compromis en terme de sécurité au grillage, d'hystérèse et de pouvoir renforçant, pour des compositions de caoutchouc renforcées d'une charge inorganique renforçante telle que silice. Il est à ce titre l'agent de couplage de référence de l'homme du métier pour les pneumatiques chargés de silice à basse résistance au roulement, parfois qualifiés de "Pneus Verts" pour l'économie d'énergie offerte (ou *"energy-saving Green Tyres"*).

Cet agent de couplage TESPT ne convient pas aux compositions de l'invention dépourvues de zinc ou quasiment dépourvues de zinc, l'invention ayant révélé que ces dernières nécessitent l'emploi, en combinaison, d'un mercaptosilane bloqué et d'un disulfure d'amine.

On rappelle ici que les mercaptosilanes bloqués, de manière bien connue de l'homme du métier, sont des précurseurs de silanes susceptibles de former des mercaptosilanes au cours de la préparation des compositions de caoutchouc (voir par exemple US 2002/0115767 A1 ou la demande internationale WO 02/48256). Les molécules de ces précurseurs de silane, dénommées ci-après mercaptosilanes bloqués, ont un groupement bloquant à la place de l'atome d'hydrogène. Les mercaptosilanes bloqués sont susceptibles d'être débloqués par remplacement du groupement bloquant par un atome d'hydrogène, au cours du mélangeage et de la cuisson, pour conduire à la formation d'un mercaptosilane plus réactif, défini comme un silane dont la structure moléculaire contient au moins un groupement thiol (-SH) (mercapto-) lié à un atome de carbone et au moins un atome de silicium. Ces agents de couplage de mercaptosilane bloqué peuvent être utilisés seul ou en présence d'activateur de mercaptosilane bloqué dont le rôle est d'amorcer, d'accélérer ou d'amplifier l'activité du mercaptosilane bloqué.

On utilise préférentiellement le mercaptosilane bloqué spécifique répondant à la formule générale (I):

(R'O)ₐR¹₍₃₋ₐ₎-Si-Z-S-C(= O)-A

dans laquelle :
- les symboles R¹ et R², identiques ou différents, représentent chacun un groupe hydrocarboné monovalent choisi parmi les alkyles, linéaires ou ramifiés, les cycloalkyles ou les aryles, ayant de 1 à 18 atomes de carbone;
- le symbole A représente l'hydrogène ou un groupe hydrocarboné monovalent choisi parmi les alkyles, linéaires ou ramifiés, les cycloalkyles ou les aryles, ayant de 1 à 18 atomes de carbone et les alkoxyalkyles, linéaires ou ramifiés, ayant de 2 à 8 atomes de carbone ;
- le symbole Z représente un groupe de liaison divalent comportant de 1 à 18 atomes de carbone ;
- a est un nombre entier égal 1, 2 ou 3.

Un tel composé répondant à la formulation générique (I) ci-dessus est connu et a été décrit en détail dans la demande WO 2004/033548 en tant qu'agent de couplage dans des compositions de caoutchouc chargées d'une charge inorganique telle que silice, destinées à des armatures de renforcement de sommet (ou "ceintures") de pneumatiques.

De nombreux mercaptosilanes bloqués répondant à la formule (I) ci-dessus ont été décrits dans l'art antérieur, par exemple dans les demandes US-A-20020115767 ou WO 02/48256 où ils sont incorporés dans des compositions de caoutchouc type SBR utilisables pour la fabrication de bandes de roulement de pneumatiques tourisme.

On voit bien que pour assurer la liaison entre l'élastomère diénique et la charge inorganique renforçante, il comporte par molécule:
- d'une part, à titre de fonction "X", un groupe fonctionnel polysulfure (Sₓ) capable de former une liaison stable avec l'élastomère diénique ;
- d'autre part, à titre de fonction "Y", un et un seul groupe (-OR) par atome de silicium - fonction (≡Si-OR) - lui permettant de se greffer sur la charge inorganique renforçante par l'intermédiaire de ses groupes hydroxyle de surface ;
- les deux enchaînements Z assurant le lien entre le groupe polysulfure au centre de la molécule et les deux fonctions (≡Si-OR) fixées à chaque extrémité de la molécule.

Les groupes Z comportant de 1 à 18 atomes de carbone représentent notamment une chaîne alkylène, un groupe cycloalkylène saturé, un groupe arylène, ou un groupe divalent constitué d'une combinaison d'au moins deux de ces groupes. Ils sont de préférence choisis parmi les alkylènes en C₁-C₁₈ et les arylènes en C₆-C₁₂ ; ils peuvent être substitués ou interrompus par un ou plusieurs hétéroatomes, choisis en particulier parmi S, O et N.

Dans la formule (I) ci-dessus, on a de préférence les caractéristiques suivantes qui sont vérifiées:
- les symboles R¹ et R² sont choisis parmi méthyle, éthyle, n-propyle et isopropyle ;
- le symbole A est choisi parmi hydrogène, méthyle, éthyle, n-propyle et isopropyle ;
- les symboles Z sont choisis parmi les alkylènes en C₁-C₈.

Plus préférentiellement encore,
- les symboles R¹ et R² sont choisis parmi méthyle et éthyle ;
- le symbole A est choisi parmi hydrogène, méthyle et éthyle ;
- les symboles Z sont choisis parmi les alkylènes en C₁-C₄, notamment méthylène, éthylène ou propylène, plus particulièrement le propylène - (CH₂)₃ -.

A titre d'exemple préférentiel de mercaptosilane bloqué répondant à la formule (I), on citera tout particulièrement le de formule particulière (II) ci-après:

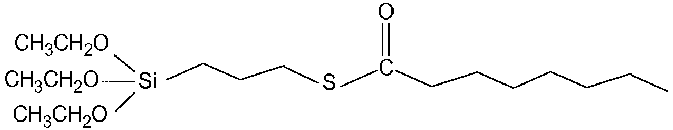

Un tel silane a par exemple été décrit, ainsi que sa synthèse, dans les demandes de brevet WO 02/30939 et WO02/31041.

Ce mercaptosilane bloqué est commercialisé notamment par la société General Electrics OSI sous la dénomination Silane NXT (ou Silane NXT-Carbo lorsqu'il est supporté à 50% en poids sur du noir de carbone).

De nombreux mercaptosilanes bloqués répondant à la formule (I) ci-dessus ont été décrits dans l'art antérieur, par exemple dans les demandes US-A-20020115767 ou WO 02/48256 où ils sont incorporés dans des compositions de caoutchouc type SBR utilisables pour la fabrication de bandes de roulement de pneumatiques tourisme.

L'homme du métier saura ajuster la teneur en polysulfure de formule (I) en fonction des modes de réalisation particuliers de l'invention, notamment de la quantité de charge inorganique renforçante utilisée, le taux préférentiel représentant entre 2% et 20% en poids par rapport à la quantité de charge inorganique renforçante ; des taux inférieurs à 15%, notamment inférieurs à 10%, sont plus particulièrement préférés.

Compte tenu des quantités exprimées ci-dessus, de manière générale, la teneur en silane-polysulfure est de préférence comprise entre 2 et 20 pce. En dessous du minima indiqué l'effet risque d'être insuffisant, alors qu'au delà du maximum préconisé on n'observe généralement plus d'amélioration, alors que les coûts de la composition augmentent ; pour ces différentes raisons, cette teneur est plus préférentiellement encore comprise entre 2 et 10 pce.

### II-4. Disulfure d'amine

La composition de l'invention a pour autre caractéristique spécifique de comporter en outre un disulfure d'amine, à titre d'agent donneur de soufre (c'est-à-dire en complément du soufre élémentaire).

Comme agents donneurs de soufre conviennent les agents de vulcanisation comme les disulfures d'amine, qui permettent la vulcanisation des compositions pour bande de roulement sans pénaliser la mise en oeuvre. Ils sont utilisés en combinaison avec du soufre élémentaire et des accélérateurs de vulcanisation classiquement utilisés dans les compositions pour bande de roulement.

On citera par exemple comme agent donneur de soufre conforme à l'invention la 4,4'-dithiomorpholine, la 2-(4-morpholinodithio)-benzothiazole. Convient plus particulièrement pour la réalisation de l'invention le disulfure de dicaprolactame, commercialisé par la société

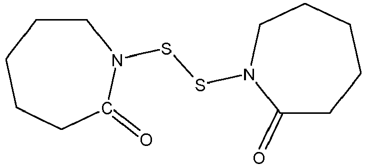

Rhein Chemie sous la dénomination "Rhenogran CLD 80", de formule (III) ci-après :

L'homme du métier saura ajuster la teneur en agent donneur de soufre de formule (III) en fonction des modes de réalisation particuliers de l'invention, le taux étant préférentiellement compris entre 0,5 et 10,0 pce.

### II-5. Additifs divers

Les compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation, des activateurs de vulcanisation exclusion faite bien entendu des activateurs à base de zinc (ou dans le respect des 0,5 pce maximum de zinc dans la composition).

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

Ces compositions peuvent également contenir, en complément des agents de couplage, des activateurs de couplage, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxy-polydiméthylsiloxanes), des acides gras comme par exemple l'acide stéarique.

### II-6. Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, à savoir la charge inorganique renforçante, l'agent de couplage de formule (I) et le noir de carbone sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres ; le tout est alors mélangé (phase productive) pendant quelques minutes, par exemple entre 2 et 15 min.

Le système de vulcanisation proprement dit est préférentiellement à base de soufre et d'un accélérateur primaire de vulcanisation, en particulier d'un accélérateur du type sulfénamide. A ce système de vulcanisation peuvent venir s'ajouter, incorporés au cours de la première phase non-productive et/ou au cours de la phase productive, divers accélérateurs secondaires ou activateurs de vulcanisation connus, à l'exclusion du zinc et de tout dérivé de zinc tel que ZnO ou en respectant une teneur maximale en zinc de la composition de 0,5 pce, tels que par exemple des acides gras comme l'acide stéarique, des dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

### III. EXEMPLES DE REALISATION DE L'INVENTION

### III-1 Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique (coupage SBR et BR), la silice complétée par une faible quantité de noir de carbone, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III-2 Caractérisation des compositions de caoutchouc

Cet essai a pour but de démontrer les propriétés améliorées d'une composition de caoutchouc dépourvue de zinc selon l'invention comparée à des compositions de caoutchouc dépourvues de zinc mais utilisant des agents de couplage traditionnellement utilisés dans le compositions de caoutchouc pour bandes de roulement de pneumatiques ayant de la silice à titre de charge renforçante.

On prépare pour cela 4 compositions à base d'un élastomère diénique (coupage SBR/BR) renforcées d'une silice hautement dispersible (HDS), ces compositions différant essentiellement par les caractéristiques techniques qui suivent :
- la composition C1 est une composition témoin « classique » contenant du zinc (1,5 pce de ZnO) et le composé TESTP à titre d'agent de couplage
- la composition C2 correspond à la composition C1 mais dépourvue de zinc,
- la composition C3 est dépourvue de zinc et comprend du-octanoylthio-1-propyltriéthoxysilane à titre d'agent de couplage,
- la composition C4 conforme à l'invention, est dépourvue de zinc et comprend du 3-octanoylthio-1-propyltriéthoxysilane à titre d'agent de couplage et du disulfure de dicaprolactame.

Afin que les propriétés de ces compositions soient comparables, les agents de couplage des compositions C2 à C4 sont utilisés à un taux isomolaire en silicium comparativement à la composition témoin C1.

Les tableaux 1 et 2 donnent la formulation des différentes compositions (tableau 1 - taux des différents produits exprimés en pce ou parties en poids pour cent parties d'élastomère) ainsi que leurs propriétés avant et après cuisson (environ 40 min à 150°C) ; le système de vulcanisation est constitué par soufre et sulfénamide.

L'examen des résultats du tableau 2 concernant les propriétés avant cuisson montre tout d'abord que seule la composition conforme à l'invention C4, comportant un mercaptosilane bloqué de formule générale (I) et un disulfure d'amine, comparée à la composition témoin C-1 qui contient le taux classiquement utilisé de zinc, permet à la fois de maintenir un temps de grillage T5 acceptable (quasiment identique à celui de C1), tout en améliorant de façon remarquable la processabilité de la composition (Mooney beaucoup plus faible que pour la composition C1).

Les autres compositions C2 ou C3 ayant des propriétés rédhibitoires pour leur utilisation en pneumatique du fait d'un temps de grillage beaucoup trop faible; on notera également leur très grande rigidité (Mooney très élevé).

Par ailleurs, l'observation des propriétés après cuisson de ces compositions montre :
- une dureté shore identique de la composition conforme à l'invention C4 par rapport à la composition témoin C1,
- le maintien entre ces deux compositions C1 et C4 des différentes modules M10,M100,M300 ainsi que de l'indice de renforcement (rapport M300/M100), indicateur clair pour l'homme du métier d'une très bonne aptitude des compositions de l'invention à résister à l'usure,
- ainsi qu'une similitude des propriétés de contrainte et allongement à la rupture entre la composition C4 conforme à l'invention et la composition témoin C1.

On notera qu'en particulier la composition C3 qui contient le même agent de couplage que la composition C4 conforme à l'invention, mais utilisé seul montre une dégradation de l'indice de renforcement (M300/M100).

En conclusion, seule l'utilisation combinée d'un agent de couplage de formule (I) et d'un disulfure d'amine, permet, de manière inattendue, d'éliminer totalement, sans le remplacer par un autre métal, le zinc ou tout dérivé de zinc des compositions de caoutchouc, en préservant, en termes de grillage, la processabilité de ces dernières, contrairement aux compositions conventionnelles connues, notamment celles utilisées commercialement, incorporant notamment le TESPT comme agent de couplage.

**Tableau 1**

| **Composition No :** | **1** | **2** | **3** | **4** |
|---|---|---|---|---|
| SBR (1) | 69 | 69 | 69 | 69 |
| BR (2) | 31 | 31 | 31 | 31 |
| Silice (3) | 81 | 81 | 81 | 81 |
| Agent de couplage (4) | 6.48 | 6.48 | - | - |
| Agent de couplage (5) | - | - | 6.14 | 6.14 |
| Plastifiant (6) | 16.4 | 16.4 | 16.4 | 14.4 |
| Cire | 1.5 | 1.5 | 1.5 | 1.5 |
| Antioxydant (7) | 1.9 | 1.9 | 1.9 | 1.9 |
| DPG (8) | 1.5 | 1.5 | 1.5 | 1.5 |
| Noir de carbone (9) | 5 | 5 | 5 | 5 |
| ZnO | 1.5 | - | - | - |
| Donneur de soufre (10) | - | - | - | 2.7 |
| Acide stéarique | 2 | 2 | 2 | 2 |
| Soufre | 1.1 | 1.1 | 1.1 | 1.1 |
| Accélérateur (11) | 2 | 2 | 2 | 2 |

| | | | | |
|---|---|---|---|---|
| (1) SBR (exprimé en SBR sec) étendu avec 10% en poids (6.9 pce) d'huile (soit au total 75.9 pce de SBR étendu) ; 25% de styrène, 58% de motifs polybutadiène 1-2 et 23% de motifs polybutadiène 1-4 trans (Tg = -24°C) ; (2) BR avec 4,3% de 1-2 ; 2,7% de trans ; 93% de cis 1-4 (Tg = -106°C) ; (3) silice "Zeosil 1165MP" de la société Rhodia, type "HD" - (BET et CTAB : environ 160 m²/g) ; (4) agent de couplage TESPT ("Si69" de la société Degussa) ; (5) 3-octanoylthio-1-propyltriéthoxysilane ("silane NXT" de la société General Electrics OSI) de formule (I) ; (6) huile MES (Flexon 683, société Exxon Mobil) ; (7) N-1,3-diméthylbutyl-N-phénylparaphénylènediamine (Santoflex 6-PPD de la société Flexsys) ; (8) diphénylguanidine (Perkacit DPG de la société Flexsys) ; (9) noir de carbone N234 ; (10) disulfure de dicaprolactame ("Rhenogran CLD 80" de la société Rhein Chemie) ; (11) N-cyclohexyl-2-benzothiazyl-sulfénamide (Santocure CBS de la société Flexsys). | | | | |

**Tableau 2**

| **Composition No :** | **1** | **2** | **3** | **4** |
|---|---|---|---|---|
| *Propriétés avant cuisson :* | | | | |
| Mooney | 105 | 114 | 108 | 86 |
| T5 (min) | 14 | 7 | 10 | 13 |
| | | | | |

| *Propriétés après cuisson :* | | | | |
|---|---|---|---|---|
| Dureté shore A | 68 | 68 | 64 | 68 |
| M10 (MPa) | 5.6 | 5.6 | 5.5 | 6.0 |
| M100 (MPa) | 2.1 | 2.2 | 1.8 | 2.2 |
| M300 (MPa) | 2.4 | 2.8 | 2.0 | 2.5 |
| M300/M100 | 1.14 | 1.14 | 1.11 | 1.14 |
| Contrainte rupture (MPa) | 19.8 | 20.2 | 19.6 | 20.1 |
| Allongement rupture (%) | 513 | 438 | 534 | 524 |

## Revendications

1. Composition de caoutchouc dépourvue de zinc ou contenant moins de 0,5 pce, parties pour cent parties en poids d'élastomère, de zinc, utilisable pour la fabrication de pneumatiques, à base d'au moins :
- un élastomère diénique,
- un système de réticulation à base de soufre,
- une charge inorganique à titre de charge renforçante,
- un mercaptosilane bloqué,
- et un disulfure d'amine.

2. Composition selon la revendication 1, dans laquelle le disulfure d'amine est choisi dans le groupe comprenant la 4,4'-dithiomorpholine, la 2-(4-morpholinodithio)-benzothiazole, le disulfure de caprolactame.

3. Composition selon l'une quelconque des revendications 1 ou 2, dans laquelle le mercaptosilane bloqué répond à la formule générale (I):
(R²O)ₐR¹₍₃₋ₐ₎-Si-Z-S-C(=O)-A
dans laquelle :
- les symboles R¹ et R², identiques ou différents, représentent chacun un groupe hydrocarboné monovalent choisi parmi les alkyles, linéaires ou ramifiés, les cycloalkyles ou les aryles, ayant de 1 à 18 atomes de carbone;
- le symbole A représente l'hydrogène ou un groupe hydrocarboné monovalent choisi parmi les alkyles, linéaires ou ramifiés, les cycloalkyles ou les aryles, ayant de 1 à 18 atomes de carbone et les alkoxyalkyles, linéaires ou ramifiés, ayant de 2 à 8 atomes de carbone ;
- le symbole Z représente un groupe de liaison divalent comportant de 1 à 18 atomes de carbone ;
- a est un nombre entier égal 1, 2 ou 3.

4. Composition selon la revendication 3, dans laquelle les caractéristiques suivantes sont vérifiées :
- les symboles R¹ et R² sont choisis parmi méthyle et éthyle ;
- le symbole A est choisi parmi hydrogène, méthyle et éthyle ;
- le symbole Z est choisi parmi les alkylènes en C₁-C₄.

5. Composition selon la revendication 3, dans laquelle Z est choisi parmi méthylène, éthylène ou propylène.

6. Composition selon l'une quelconque des revendications 3 à 5, dans laquelle R¹, R² et A sont des éthyle et Z est un propylène.

7. Composition selon l'une quelconque des revendications 1 à 5, dans laquelle l'élastomère diénique étant choisi dans le groupe constitué par les polybutadiènes, les polyisoprènes synthétiques, le caoutchouc naturel, les copolymères de butadiène, les copolymères d'isoprène et les mélanges de ces élastomères.

8. Composition selon l'une quelconque des revendications 1 à 7, dans laquelle la charge inorganique renforçante étant une charge siliceuse ou alumineuse.

9. Composition selon l'une quelconque des revendications 1 à 8, dans laquelle la quantité de charge inorganique renforçante étant supérieure à 50 pce.

10. Composition selon l'une quelconque des revendications 1 à 9, dans laquelle le taux d'agent de couplage étant compris entre 2 et 15 pce.

11. Procédé de préparation d'une composition, dépourvue de zinc ou contenant moins de 0,5 pce de zinc, **caractérisé en ce qu'**on incorpore au moins, par malaxage, à au moins (i) un élastomère diénique, (ii) une charge inorganique à titre de charge renforçante, (iii) un mercaptosilane bloqué et un disulfure d'amine, et (iv) un système de vulcanisation à base de soufre.

12. Procédé selon la revendication 11, comportant les étapes suivantes :
- incorporer à l'élastomère diénique, dans un mélangeur, la charge renforçante, le mercaptosilane bloqué et le disulfure d'amine en malaxant thermomécaniquement le tout, en une ou plusieurs fois, jusqu'à atteindre une température maximale comprise entre 130°C et 200°C,
- refroidir l'ensemble à une température inférieure à 100°C,
- incorporer ensuite : le système de vulcanisation;
- malaxer le tout jusqu'à une température maximale inférieure à 120°C ;
extruder ou calandrer la composition de caoutchouc ainsi obtenue.

13. Pneumatique ou produit semi-fini comportant une composition de caoutchouc selon l'une quelconque des revendications 1 à 10.

14. Bande de roulement de pneumatique comportant une composition de caoutchouc selon l'une quelconque des revendications 1 à 10.

## Patentansprüche

1. Zinkfreie oder weniger als 0,5 phr (phr = Gewichtsteile pro hundert Teile Elastomer) Zink enthaltende Kautschukzusammensetzung, die zur Herstellung von Reifen verwendet werden kann, auf Basis von mindestens:
- einem Dienelastomer,
- einem Vernetzungssystem auf Basis von Schwefel,
- einem anorganischen Füllstoff als verstärkenden Füllstoff,
- einem blockierten Mercaptosilan
- und einem Amindisulfid.

2. Zusammensetzung nach Anspruch 1, wobei das Amindisulfid aus der Gruppe umfassend 4,4'-Dithiomorpholin, 2-(4-Morpholinodithio)benzothiazol und Caprolactamdisulfid ausgewählt ist.

3. Zusammensetzung nach einem der Ansprüche 1 oder 2, wobei das blockierte Mercaptosilan der allgemeinen Formel (I) entspricht:
(R²O)ₐR¹₍₃₋ₐ₎-Si-Z-S-C(=O)-A
worin:
- die Symbole R¹ und R² gleich oder verschieden sind und jeweils für eine einwertige Kohlenwasserstoffgruppe, die aus linearen oder verzweigten Alkylresten, Cycloalkylresten oder Arylresten mit 1 bis 18 Kohlenstoffatomen ausgewählt ist, stehen;
- das Symbol A für Wasserstoff oder eine einwertige Kohlenwasserstoffgruppe, die aus linearen oder verzweigten Alkylresten, Cycloalkylresten oder Arylresten mit 1 bis 18 Kohlenstoffatomen und linearen oder verzweigten Alkoxyalkylresten mit 2 bis 8 Kohlenstoffatomen ausgewählt ist, steht;
- das Symbol Z für eine zweiwertige Verbindungsgruppe mit 1 bis 18 Kohlenstoffatomen steht;
- a eine ganze Zahl mit einem Wert von 1, 2 oder 3 ist.

4. Zusammensetzung nach Anspruch 3, wobei die folgenden Merkmale erfüllt sind:
- die Symbole R¹ und R² sind aus Methyl und Ethyl ausgewählt;
- das Symbol A ist aus Wasserstoff, Methyl und Ethyl ausgewählt;
- das Symbol Z ist aus C₁-C₄-Alkylenresten ausgewählt.

5. Zusammensetzung nach Anspruch 3, wobei Z aus Methylen, Ethylen oder Propylen ausgewählt ist.

6. Zusammensetzung nach einem der Ansprüche 3 bis 5, wobei R¹, R² und A für Ethyl stehen und Z für ein Propylen steht.

7. Zusammensetzung nach einem der Ansprüche 1 bis 5, wobei das Dienelastomer aus der Gruppe bestehend aus Polybutadienen, synthetischen Polyisoprenen, Naturkautschuk, Butadiencopolymeren, Isoprencopolymeren und Mischungen dieser Elastomere ausgewählt ist.

8. Zusammensetzung nach einem der Ansprüche 1 bis 7, wobei es sich bei dem verstärkenden anorganischen Füllstoff um einen siliciumdioxid- oder aluminiumoxidhaltigen Füllstoff handelt.

9. Zusammensetzung nach einem der Ansprüche 1 bis 8, wobei die Menge an verstärkendem anorganischem Füllstoff über 50 phr liegt.

10. Zusammensetzung nach einem der Ansprüche 1 bis 9, wobei der Gehalt an Kupplungsmittel zwischen 2 und 15 phr liegt.

11. Verfahren zur Herstellung einer zinkfreien oder weniger als 0,5 phr Zink enthaltenden Zusammensetzung, **dadurch gekennzeichnet, dass** man durch Kneten in mindestens (i) ein Dienelastomer (ii) einen anorganischen Füllstoff als verstärkenden Füllstoff, (iii) ein blockiertes Mercaptosilan und ein Amindisulfid und (iv) ein Vulkanisationssystem auf Basis von Schwefel einarbeitet.

12. Verfahren nach Anspruch 11, bei dem man:
- in einem Mischer den verstärkenden Füllstoff, das blockierte Mercaptosilan und das Amindisulfid in das Dienelastomer einarbeitet, indem man das Ganze ein- oder mehrmals thermomechanisch knetet, bis eine Höchsttemperatur zwischen 130°C und 200°C erreicht ist,
- das Ganze auf eine Temperatur von weniger als 100°C abkühlt;
- dann das Vulkanisationssystem einarbeitet;
- das Ganze bis zu einer Höchsttemperatur von weniger als 120°C knetet;
- die so erhaltene Kautschukzusammensetzung extrudiert oder kalandriert.

13. Reifen oder Halbzeug, umfassend eine Kautschukzusammensetzung nach einem der Ansprüche 1 bis 10.

14. Reifenlauffläche, umfassend eine Kautschukzusammensetzung nach einem der Ansprüche 1 bis 10.

## Claims

1. Rubber composition that is free of zinc or that contains less than 0.5 phr of zinc, which can be used for the manufacture of tyres, based on at least:
- one diene elastomer;
- one sulphur-based crosslinking system;
- one inorganic filler as reinforcing filler;
- one blocked mercaptosilane; and
- one amine disulphide.

2. Composition according to Claim 1, in which the amine disulphide is chosen from the group comprising 4,4'-dithiomorpholine, 2-(4-morpholinodithio)benzothiazole and caprolactam disulphide.

3. Composition according to either one of Claims 1 and 2, in which the blocked mercaptosilane corresponds to the general formula (I):
(R²O)ₐR¹₍₃₋ₐ₎-Si-Z-S-C(=O)-A
in which:
- the symbols R¹ and R², which are identical or different, each represent a monovalent hydrocarbon-based group chosen from alkyls, which are linear or branched, cycloalkyls or aryls, having from 1 to 18 carbon atoms;
- the symbol A represents hydrogen or a monovalent hydrocarbon-based group chosen from alkyls, which are linear or branched, cycloalkyls or aryls, having from 1 to 18 carbon atoms, and from linear or branched alkoxyalkyls having from 2 to 8 carbon atoms;
- the symbol Z represents a divalent bonding group comprising from 1 to 18 carbon atoms;
- a is an integer equal to 1, 2 or 3.

4. Composition according to Claim 3, in which the following characteristics are borne out:
- the symbols R¹ and R² are chosen from methyl, ethyl, n-propyl and isopropyl, preferably from methyl and ethyl;
- the symbol A is chosen from hydrogen, methyl, ethyl, n-propyl and isopropyl, preferably from hydrogen, methyl and ethyl;
- the symbol Z is chosen from C₁-C₈ alkylenes, preferably from C₁-C₄ alkylenes.

5. Composition according to Claim 3, in which Z is chosen from methylene, ethylene or propylene, more particularly propylene.

6. Composition according to any one of Claims 3 to 5, in which R¹, R² and A are ethyls and Z is a propylene.

7. Composition according to any one of Claims 1 to 5, in which the diene elastomer being chosen from the groups consisting of polybutadienes, synthetic polyisoprenes, natural rubber, butadiene copolymers, isoprene copolymers and mixtures of these elastomers.

8. Composition according to any one of Claims 1 to 7, in which the reinforcing inorganic filler being a siliceous or aluminous filler.

9. Composition according to any one of Claims 1 to 8, in which the amount of reinforcing inorganic filler being greater than 50 phr.

10. Composition according to any one of Claims 1 to 9, in which the content of coupling agent being between 2 and 15 phr.

11. Process for preparing a composition that is free of zinc or that contains less than 0.5 phr of zinc, **characterized in that**, incorporated at least, by kneading, into at least (i) one diene elastomer, are (ii) an inorganic filler as reinforcing filler, (iii) a blocked mercaptosilane and an amine disulphide, and (iv) a sulphur-based vulcanization system.

12. Process according to Claim 11, comprising the following steps:
- incorporating into the diene elastomer, in a mixer, the reinforcing filler, the blocked mercaptosilane and the amine disulphide by thermomechanically kneading all the ingredients, one or more times, until a maximum temperature between 130°C and 200°C is reached;
- cooling the mixture down to a temperature below 100°C;
- then incorporating: the vulcanization system;
- kneading everything up to a maximum temperature below 120°C; and
- extruding or calendering the rubber composition thus obtained.

13. Tyre or semi-finished product comprising a rubber composition according to any one of Claims 1 to 10.

14. Tyre tread comprising a rubber composition according to any one of Claims 1 to 10.
